# EUROPEAN PATENT SPECIFICATION

(11) **EP 1 252 109 B1**
(45) Date of publication and mention of the grant of the patent: **29.03.2006**
(21) Application number: 01902653.3
(22) Date of filing: 19.01.2001
(51) Int. Cl.: C02F 9/00

(54) **WATER PURIFICATION PROCESS AND PURIFICATION PLANT**
VERFAHREN UND VORRICHTUNG ZUR REINIGUNG VON WASSER
PROCEDE DE PURIFICATION D'EAU ET STATION D'EPURATION DES EAUX RESIDUAIRES INDUSTRIELLES

(30) Priority: 21.01.2000 IT TO000056
(43) Date of publication of application: 30.10.2002
(73) Proprietor: Alexander Sandison & Sons Ltd, Shetland ZE2 9DS (GB); Montorio, Luca, Stirling, Stirlingshire FK8 1NU (GB)
(72) Inventor: MONTORIO, Luca, Stirling, Stirlingshire FK8 1NU (GB); OWERS, Stewart, Alexander Sandison & Sons Ltd, Shetland ZE2 9DS (GB)
(74) Representative: Prato, Roberto
(86) International application number: PCT/IT2001/000029
(87) International publication number: WO 2001/053207

(56) References cited:
- EP-A- 0 413 356
- EP-A- 0 502 460
- GB-A- 2 025 922
- PATENT ABSTRACTS OF JAPAN vol. 008, no. 1994 (C-242), 12 September 1984 (1984-09-12) & JP 59 090694 A (MITSUBISHI JUKOGYO KK), 25 May 1984 (1984-05-25) & DATABASE WPI Section Ch, Week 198427 Derwent Publications Ltd., London, GB; Class D15, AN 1984-167720 & JP 59 090694 A (HARADA), 25 May 1984 (1984-05-25)

## Description

### TECHNICAL FIELD

The present invention concerns a water purification process and relative purification plant, in particular by the oxidation of inorganic nitrogenous compounds.

### BACKGROUND ART

Nitrogenous compounds are generally considered as water polluting and, during the water purification process, an oxidation step or the elimination of such compounds is therefore necessary by transformation into non-polluting nitrates, according to the following reactions:

(1) NH4+ + 1.5 O2 -> 2H+ + H2O + NO2-

(2) NO2- + 0.5O2 -> NO3-.

For this purpose, a process is known to treat the organic nitrogenous compounds with biological filters which contain bacteria capable of turning the nitrogenous compounds into inorganic nitrogenous compounds, namely ammonia and nitrites and thus oxidize the inorganic nitrogenous products into nitrates.

Such filters are more vulnerable and less efficient in the treatment of inorganic nitrogenous compounds and also extremely sensitive to chemical-physical type environmental fluctuations.

In particular, the efficiency of the biological filters varies considerably with temperature and pH (the oxidation efficiency is considerably reduced at low or high values).

The biological filters normally include heterotrophic and autotrophic bacteria. The heterotrophic bacteria are able to turn the organic nitrogenous compounds into ammonia, while the autotrophic bacteria oxidize the ammonia into nitrites, and the nitrites into nitrates, which are not considered as polluting. In particular, the ammonia is generally oxidized into nitrites by numerous families of autotrophic bacteria, among which, for example, are the nitrosomonas and the nitrites are afterwards oxidized into nitrates by other kinds of bacteria, among which, for example, are the Nitrobacteria.

Since the heterotrophic bacteria need carbon based compounds to function correctly, whereas autotrophic ones need inorganic azote, the water quality, measured as oxygen demand in the form of carbonaceous compounds, influences the transformation capacity of the nitrogenous compounds. The result is that the heterotrophic bacteria generally grow at a greater speed than autotrophic bacteria or nitrosomes and thus is difficult for nitrobacteria to achieve the elimination of organic nitrogenous compounds by transformation into inorganic nitrogenous compounds, more quickly, and with the slower transformation of inorganic nitrogenous compounds into non-polluting nitrates in the same filters in a single step.

It is therefore necessary to proceed with the biological treatment, which is able to only partially oxidize the inorganic nitrogenous compounds, an oxidation treatment using chlorine or ozone able to complete the oxidation of such residual compounds. This water purification process occurs in two separate step s. Moreover, in the particular case of the breeding of aquatic organisms, it is impossible to use purification plants in which one proceeds with a total oxidation of the substances present, with chlorine or ozone, since such substances prove toxic for the aquatic organisims themselves, even at low percentages.

For example, a known purification plant for the elimination of nitrogenous compounds deriving from metabolites in an aquatic organism farm can consist of a main purification circuit for the partial conditioning of all the water in tanks where the fish are bred and a secondary or lateral purification circuit for the total conditioning of part of the water, able to increase the total purity degree of the water. The main purification circuit includes a drum filter or sand filter to hold back the large particulate and a biological filter for the removal of nitrogenous compounds arising from metabolic activity which presents the aforesaid problems.

In addition, part of the water undergoes further purification treatment through the secondary purification circuit which essentially includes an ozonization step . Ozone is a strong oxidizer and is therefore able to eliminate the additional fine particulate in the water by oxidising it. However., such treatment proves very expensive and besides, as already mentioned, the ozone is toxic for the aquatic organisms, also in small amounts. Hence it is impossible to extend the ozonization treatment to all the water to be purified. It would therefore be desirable to be able to avoid the introduction, into the water purification process, of the treatment step with ozone in the breeding of aquatic organisms and reduce the amount of chlorine used in the conditioning process.

The known water purification plants are therefore complex and expensive and the purification process needs many step s and, on the whole, optimum efficiency is not achieved.

### DISCLOSURE OF INVENTION

Therefore the aim of the present invention is to achieve a water purification process and a relative plant which solves the aforesaid drawbacks and which is more efficient and reliable also at different pH and temperature values, able to maintain high efficiency also in the case of rapid growth of the inorganic nitrogenous compounds themselves and, in particular, that it is simpler and hence less expensive.

Another aim of the present invention is besides to produce a water purification plant for the conditioning process.

A third aim of the present invention is to produce a water purification plant for the breeding of aquatic organisms.

According to the present invention a water purification process is achieved according to claim 1.

According to the present invention a water purification plant is besides achieved according to claim 9.

### BRIEF DESCRIPTION OF THE DRAWINGS

For a better understanding of the present invention, a water purification plant will now be described in detail, supplied simply as an explanatory, non-limiting example, also with reference to the enclosed designs, which show:
- Figure 1 is a block diagram of a purification plant produced according to the present invention; and
- Figure 2 is a partial view of a detail of the water purification plant in figure 1.

### BEST MODE FOR CARRYING OUT THE INVENTION

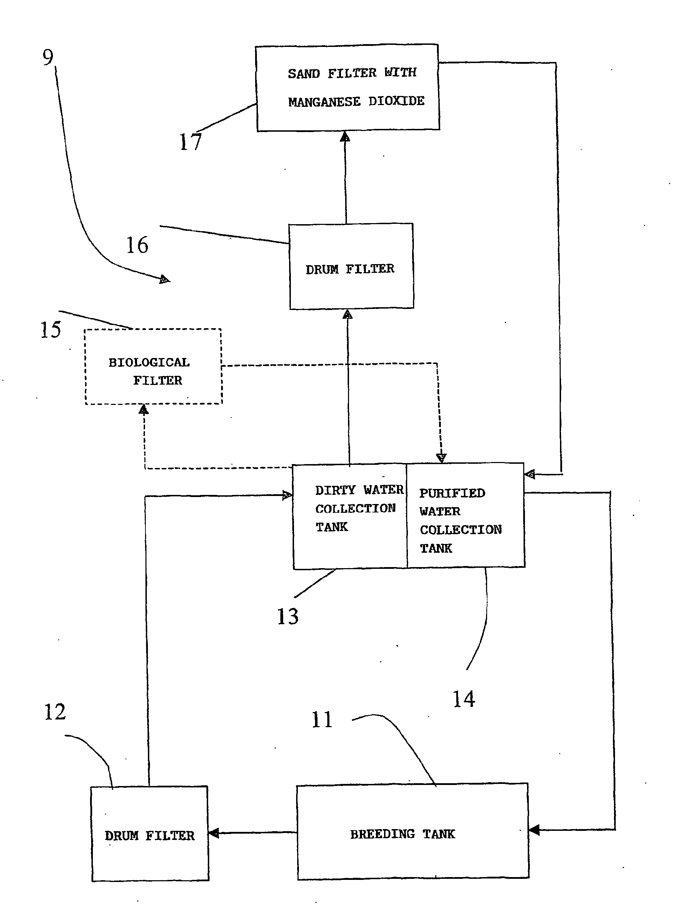

With reference to the block diagram in figure 1, 9 denotes, as a whole, a water purification plant for the breeding of aquatic organisms including a breeding tank 11 for the aquatic organisms, a drum filter 12 for the elimination of the coarse particulate, a dirty water collection tank 13, a purified water tank 14, a biological filter 15, a second drum filter 16 and a second filter biological 17 containing manganese dioxide.

In the purification plant 9, the water contained in the breeding tank 11 flows towards a drum filter 12 for the removal of the larger particulate. Hence, the water is conveyed into the dirty water tank 13.

Afterwards, part of the water can be taken from the dirty water tank 13 and filtered through a biological filter 15.

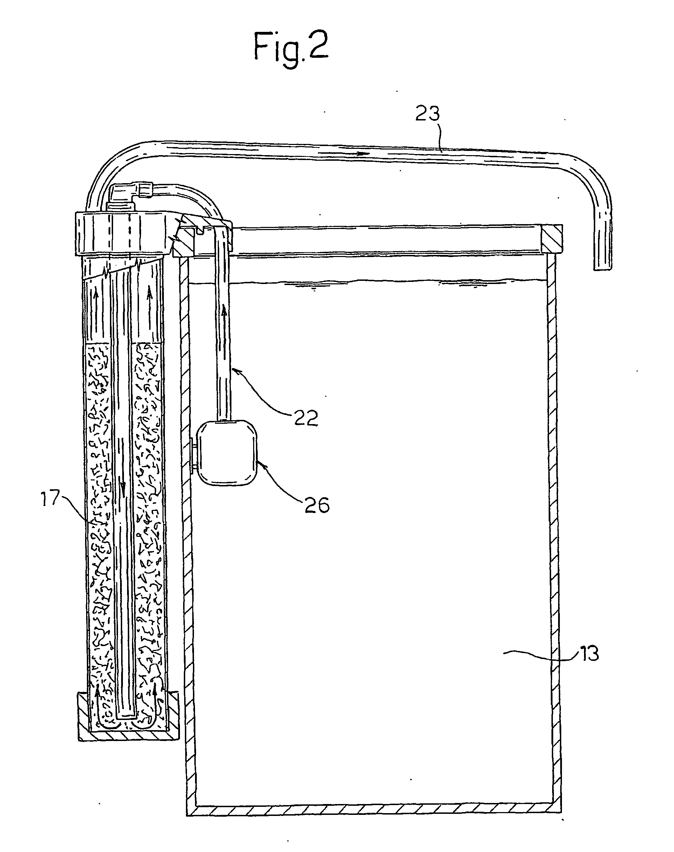

A percentage of the water is then taken from the dirty water tank 13 (figure 2) by pump 26 depending on the final purity desired, and is made to pass through the tube 22 and introduced into the second biological filter 17 containing manganese dioxide and thus it exits towards the purified water tank 14 through tube 23. A drum filter 16 can be placed between the dirty water tank 13 and the filter 17, if necessary (figure 1).

In particular, the second biological filter 17 includes grains of sand and manganese dioxide as support material, preferably in amounts of between 15-25% in volume, calculated on the total volume of filter 17.

The manganese dioxide used in the present invention has a granulometry which varies according to the various plants.

Preferably, since the manganese dioxide is, on average, heavier than the grains of sand the manganese dioxide is added in granular form so as to ensure uniform mixing along the whole thickness of the filter.

However it is also possible to use the manganese dioxide without support material, for the oxidization of inorganic nitrogenous compounds for example in semi-intensive farms, as in ponds or similar.

In any case, the regeneration of the manganese dioxide necessary in filters in which it is used for other.purposes is superfluous, according to the present invention, since in this case it does not have an oxidizing function and is thus not reduced.

Table 1 contains an example of a second biological filter 17 containing manganese dioxide usable in a water purification plant 9 as previously described..

**Table 1**

| | |
|---|---|
| Average size of grade 16/30 grains of sand | 0.595-1.19mm |
| Size of grade 18/44 manganese dioxide | 0.355-0.85mm |
| Ratio between sand and manganese dioxide | 80%:20% |
| Bed size | 16 m² |
| Bed depth | 0.1m |
| Flow speed | 65 m³/hour |
| Speed | 4.1m/hour |
| Contact time | 21min. |
| Filter duration prior to washing | 1-2 days |
| Water consumption for the washing | 6-8% |
| Washing flow speed | 1.7 m³/min |
| Water flow speed | 0.11m/min. |

Table 2 contains an example of a purification plant 9 according to the present invention.

**Table 2**

| | |
|---|---|
| Total plant volume | 1050M³ |
| Fish tank 1 | 800M³ |
| % of total plant volume | 76% |
| Tank for dirty water collection 3 | 14M³ |
| Tank for purified water collection 4 | 14M³ |
| Biological filter 5 | 11M³ |
| Sand filter with MnO2 7 (40%) | 27M³ |
| Very pure water collection tank | 136M³ |
| Volume of treatment unit | 250M³ |
| % of total volume | 24% |
| | |
| Degree of recirculation | |
| New water introduced in the plant | 3 l/s |
| Maximum flow speed | 120 l/s |
| % Recirculation = (recirculated flow/ total flow) (%) | 97.5% |
| Water replaced per day | 259M³/day |
| % per day compared to total water | 24.8% |

### Mean water staying time in the purification plant 4 days

Table 3 contains data obtained from water samples taken from a purification plant 9 and relative to the oxidation of ammonia and nitrites. Each of the 26 samples was taken on a different date and the table contains the water temperature at the moment of measurement (Temp.) in centigrade, the pH of the water flow entering into the sand filter, the contact time of the water with the filter, the ammonia content before treatment (NH3 b.t.) and the ammonia content after treatment (NH3 a.t.), the efficiency of the oxidation treatment of the ammonia with a sand filter containing manganese dioxide where CBT is the NH3 concentration before treatment and CAT is NH3 concentration after treatment.

**Table 3**

| Sample number | 1 | 2 | 3 | 4 | 5 | 6 |
|---|---|---|---|---|---|---|
| Temperature. (C) | 9.3 | 11.2 | 11.1 | 11.7 | 14.5 | 12.8 |
| PH entry flow | 7.45 | 6.4 | 6.5 | 6.9 | 6.8 | 6.6 |
| Contact time (min.) | 1.5 | 1.5 | 1.5 | 1.5 | 1.5 | 1.5 |
| NH4+ p.T (mg/l) | 0.11 | 0.42 | 0.51 | 0.37 | 0.5 | 0.61 |
| NH3N+ d.T (mg/l) | 0.01 | 0.05 | 0.01 | 0.02 | 0.04 | 0.02 |
| Efficiency (1-CAT/CBT) | 0.91 | 0.88 | 0.98 | 0.95 | 0.92 | 0.97 |
| NO2-p.T (mg/l) | 0.004 | 0.028 | 0.04 | 0.042 | 0.105 | 0.183 |
| NO2-d.T (mg/l) | 0 | 0.007 | 0 | 0 | 0.004 | 0.027 |
| Efficiency (1-CAT/CBT) | 1.00 | 0.75 | 1.00 | 1.00 | 0.96 | 0.85 |
| | | | | | | |
| Sample number | 7 | 8 | 9 | 10 | 11 | 12 |
| Temperature. (C) | 16 | 14.7 | 13.2 | 14.3 | 15.1 | 12.4 |
| PH entry flow | 6.5 | 6.6 | 6.5 | 6.5 | 6.6 | 6.5 |
| Contact time (min.) | 1.5 | 1.5 | 1.5 | 1.5 | 1.5 | 1.5 |
| NH3 p.T (mg/l) | 1.24 | 1.18 | 0.86 | 1.13 | 1.00 | 0.96 |
| NH3 d.T (mg/l) | 0.05 | 0.04 | 0.07 | 0.05 | 0.05 | 0.03 |
| Efficiency (1-CAT/CBT) | 0.96 | 0.97 | 0.92 | 0.95 | 0.95 | 0.97 |
| NO2-p.T (mg/l) | 0.160 | 0.231 | 0.205 | 0.325 | 0.271 | 0.189 |
| NO2-d.T (mg/l) | 0.036 | 0.009 | 0.001 | 0 | 0 | 0 |
| Efficiency (1-CAT/CBT) | 0.78 | 0.96 | 1.00 | 1.00 | 1.00 | 1.00 |
| | | | | | | |
| Sample number | 13 | 14 | 15 | 16 | 17 | 18 |
| Temperature. (C) | 14.2 | 12.6 | 11.3 | 10.1 | 5.7 | 4.6 |
| PH entry flow | 6.6 | 7 | 6.9 | 6.3 | 7.52 | 7.35 |
| Contact time (min.) | 1.5 | 1.5 | 1.5 | 1.5 | 1.5 | 1.5 |
| NH3 p.T (mg/l) | 0.74 | 0.81 | 0.72 | 0.76 | 0.25 | 0.34 |
| NH3 d.T (mg/l) | 0.05 | 0.03 | 0.05 | 0.06 | 0 | 0 |
| Efficiency (1-CAT/CBT) | 0.93 | 0.96 | 0.93 | 0.92 | 1.00 | 1.00 |
| NO2-p.T (mg/l) | 0.173 | 0.155 | 0.079 | 0.990 | 0.032 | 0.055 |
| NO2-d.T (mg/l) | 0 | 0 | 0 | 0.001 | 0 | 0 |
| Efficiency (1-CAT/CBT) | 1.00 | 1.00 | 1.00 | 1.00 | 1.00 | 1.00 |
| | | | | | | |

| Sample number | 19 | 20 | 21 | 22 | 23 | 24 |
|---|---|---|---|---|---|---|
| Temperature. (C) | 15.6 | 14.5 | 17.4 | 15.1 | 15 | 15.4 |
| PH entry flow | 6.77 | 6.78 | 6.71 | 6 | 6.5 | 6.2 |
| | | | | | | |
| Contact time (min.) | 1.5 | 1.5 | 1.5 | 1.5 | 1.5 | 1.5 |
| NH3 p.T (mg/l) | 0.53 | 0.31 | 0.68 | 0.68 | 0.8 | 0.85 |
| NH3 d.T (mg/l) | 0.02 | 0.02 | 0.04 | 0.08 | 0.04 | 0.04 |
| Efficiency (1-CAT/CBT) | 0.96 | 0.94 | 0.94 | 0.88 | 0.95 | 0.95 |
| NO2-p.T (mg/l) | 0.08 | 0.20 | 0.20 | 0.21 | 0.26 | 0.102 |
| NO2-d.T (mg/l) | 0.014 | 0.001 | 0.028 | 0.019 | 0.016 | 0.003 |
| Efficiency (1-CAT/CBT) | 0.93 | 0.99 | 0.86 | 0.91 | 0.94 | 0.97 |

Table 4 contains the data relating to the oxidization efficiency of a filter 17 including manganese dioxide compared with an identical filter without manganese dioxide.

**Table 4**

| Filter features: | |
|---|---|
| Mean Vol. (m3) | 0.0002 |
| Section diameter (m) | 0.035 |
| Area (m2) | 0.0010 |
| Depth of the fluid bed (m) | 0.2 |
| Flow (m3/hr) | 0.086 |
| Flow, m3*hr/m2 | 89 |
| Flow, m3*hr/m3mean | 430 |
| Speed (m/hr) | 89 |
| Retention time (sec.) | 8 |
| Temperature (C) | 9.8 |
| pH | 6.8 |
| DO (mg/L) | 7.4 |
| NH4-N B.T (mg/l) | 0.84 |
| NO2-N B.T (mg/l) | 0.23 |
| Tot. Mn B.T (ug/l) | 4.3 |
| | |

| Filter with 16/30 content without manganese dioxide | |
|---|---|
| NH4-N A.T (mg/l) | 0.85 |
| Efficiency (1-(CAT/CBT)) | -0.02 |
| NH4-N removal (g/d) | -0.03 |
| NH4-N removal(g/d/m3) | -162 |
| NO2-N A.T (mg/l) | 0.257 |
| Efficiency (1-(CAT/CBT)) | -0.12 |
| Removal NO2-N (g/d) | -0.06 |
| Removal NO2-N (g/d/m3) | -289 |
| | |

| 16/30 filter + 20% (in volume) MnO2 grade 18/44 | |
|---|---|
| NH4-N A.T (mg/l) | 0.81 |
| Efficiency (1-(CAT/CBT)) | 0.03 |
| NH4-N removal (g/d) | 0.05 |
| NH4-N removal(g/d/m3) | 265 |
| NO2-N A.T (mg/l) | 0.241 |
| Efficiency (1-(CAT/CBT)) | -0.05 |
| Removal NO2-N (g/d) | -0.02 |
| Removal NO2-N (g/d/m3) | -124 |
| Tot. Mn Out (ug/L) | 4.1 |

With a purification plant, according to the present invention, it is therefore possible to achieve a degree of efficiency, for that concerning the oxidization of ammonia, of around 90% whereas a conventional biological filter has a degree of efficiency of 30-40%.

Filter 17 may also be used inside a water purification plant for conditioning. Due to the greater purity of the water exiting from filter 17, which contains a percentage of residual inorganic nitrogenous compounds which is less than that in known purification systems, it is possible to avoid or, at least, reduce the treatment of water with chlorine or ozone, as in fact occurs.in the normal purification plants for the breeding of aquatic organisms or for the conditioning process.

It is clear that modifications and variations may be made to the purification plant herein described and illustrated without leading away from the protective scope of the present invention.

## Claims

1. A water purification process including the steps of:
transforming organic nitrogenous compounds into inorganic nitrogenous compounds
oxidising said inorganic nitrogenous compounds into non pollutants nitrates,
**characterised in that** said steps are performed by bacteria in a biological filter in presence of manganese dioxide.

2. A water purification process according to claim 1 for water conditioning.

3. A water purification process according to claim 1 for breeding of aquatic organisms.

4. A water purification process according to claim 3, **characterised in that** said biological filter includes a support material.

5. A water purification process according to claim 4, **characterised in that** said support material is sand.

6. A water purification process according to claims 4 or 5, **characterised in that** said manganese dioxide is present in an amount between 5 and 25 % in volume compared to said support material.

7. A water purification process according to anyone of claims 4 to 6, **characterised in that** said manganese dioxide is contained in a sand filter.

8. A water purification process according to anyone of claims 4 to 7, **characterised in that** said manganese dioxide is present in granular form.

9. A water purification plant including a biological filter, said biological filter comprising:
transformation means of organic nitrogenous compounds into inorganic nitrogenous compounds
oxidation means of inorganic nitrogenous compounds into non pollutants nitrates,
**characterised in that** said transformation means and said oxidation means are bacteria acting in a biological filter in presence of manganese dioxide.

10. A water purification plant according to claim 9, **characterised in that** said transformation means and said oxidation means are immersed in the same container.

11. A water purification plant according to claim 9 or 10 for water conditioning.

12. A water purification plant according to claim 9 or 10 for the breeding of aquatic organisms.

13. A water purification plant according to claim 12, **characterised in that** said transformation means include a support material.

14. A water purification plant according to claim 13, **characterised in that** said support material is sand.

15. A water purification plant according to claim 14, **characterised in that** said manganese dioxide is present from 5 to 25% in volume compared to said sand.

16. A water purification plant according to anyone of claims 12 to 15, **characterised in that** said manganese dioxide is present in granular form

17. A water purification plant according to claim 16, **characterised in that** said granules are of mean size of between 0.595 and 2 mm.

## Patentansprüche

1. Reinigungsverfahren für Wasser, das die Schritte einschließt:
Umwandeln von organischen, stickstoffhaltigen Verbindungen in anorganische, stickstoffhaltige Verbindungen,
Oxidieren der anorganischen, stickstoffhaltigen Verbindungen in unschädliche Nitrate,
**dadurch gekennzeichnet, dass** die Schritte mittels Bakterien in Gegenwart von Mangandioxid in einem biologischen Filter durchgeführt werden.

2. Reinigungsverfahren für Wasser gemäß Anspruch 1 zur Wasseraufbereitung.

3. Reinigungsverfahren für Wasser gemäß Anspruch 1 zum Ausbrüten von Wasserorganismen.

4. Reinigungsverfahren für Wasser gemäß Anspruch 3, **dadurch gekennzeichnet, dass** der biologische Filter ein Trägermaterial einschließt.

5. Reinigungsverfahren für Wasser gemäß Anspruch 4, **dadurch gekennzeichnet, dass** das Trägermaterial Sand ist.

6. Reinigungsverfahren für Wasser gemäß Anspruch 4 oder 5, **dadurch gekennzeichnet, dass** das Mangandioxid im Vergleich zum Trägermaterial in einer Menge zwischen 5 und 25 Vol.% vorhanden ist.

7. Reinigungsverfahren für Wasser gemäß einem der Ansprüche 4 bis 6, **dadurch gekennzeichnet, dass** das Mangandioxid in einem Sandfilter enthalten ist.

8. Reinigungsverfahren für Wasser gemäß einem der Ansprüche 4 bis 7, **dadurch gekennzeichnet, dass** das Mangandioxid in gekörnter Form vorliegt.

9. Reinigungsanlage für Wasser, die einen biologischen Filter einschließt, wobei der biologischen Filter umfasst: Umwandlungsmittel zum Umwandeln organischer, stickstoffhaltiger Verbindungen in anorganische, stickstoffhaltige Verbindungen, Oxidationsmittel zum Oxidieren anorganischer, stickstoffhaltiger Verbindungen in unschädliche Nitrate, **dadurch gekennzeichnet, dass** die Umwandlungsmittel und die Oxidationsmittel Bakterien sind, die in einem biologischen Filter in Gegenwart von Mangandioxid wirken.

10. Reinigungsanlage für Wasser gemäß Anspruch 9, **dadurch gekennzeichnet, dass** das Umwandlungsmittel und das Oxidationsmittel im selben Behälter eingetaucht sind.

11. Reinigungsanlage für Wasser gemäß Anspruch 9 oder 10 zur Wasseraufbereitung.

12. Reinigungsanlage für Wasser gemäß Anspruch 9 oder 10 zum Ausbrüten von Wasserorganismen.

13. Reinigungsanlage für Wasser gemäß Anspruch 12, **dadurch gekennzeichnet, dass** das Umwandlungsmittel ein Trägermaterial einschließt.

14. Reinigungsanlage für Wasser gemäß Anspruch 13, **dadurch gekennzeichnet, dass** das Trägermaterial Sand ist.

15. Reinigungsanlage für Wasser gemäß Anspruch 14, **dadurch gekennzeichnet, dass** das Mangandioxid im Vergleich zum Sand von 5 bis 25 Vol.% vorhanden ist.

16. Reinigungsanlage für Wasser gemäß einem der Ansprüche 12 bis 15, **dadurch gekennzeichnet, dass** das Mangandioxid in gekörnter Form vorliegt.

17. Reinigungsanlage für Wasser gemäß Anspruch 16, **dadurch gekennzeichnet, dass** die Körnchen eine Durchschnittsgröße von zwischen 0,595 und 2 mm aufweisen.

## Revendications

1. Procédé d'épuration d'eau, incluant les étapes consistant :
à transformer des composés azotés organiques en composés azotés inorganiques
à oxyder lesdits composés azotés inorganiques en nitrates non polluants,
**caractérisé en ce que** lesdites étapes sont effectuées par des bactéries dans un filtre biologique en présence de dioxyde de manganèse.

2. Procédé d'épuration d'eau selon la revendication 1 pour conditionner de l'eau.

3. Procédé d'épuration d'eau selon la revendication 1 pour élever des organismes aquatiques.

4. Procédé d'épuration d'eau selon la revendication 3, **caractérisé en ce que** ledit filtre biologique inclut un matériau support.

5. Procédé d'épuration d'eau selon la revendication 4, **caractérisée en ce que** ledit matériau support est du sable.

6. Procédé d'épuration d'eau selon les revendications 4 ou 5, **caractérisé en ce que** ledit dioxyde de manganèse est présent en une quantité entre 5 et 25 % en volume par rapport audit matériau support.

7. Procédé d'épuration d'eau selon l'une quelconque des revendications 4 à 6, **caractérisé en ce que** ledit dioxyde de manganèse est contenu dans un filtre à sable.

8. Procédé d'épuration d'eau selon l'une quelconque des revendications 4 à 7, **caractérisé en ce que** ledit dioxyde de manganèse est présent sous forme granulaire.

9. Installation d'épuration d'eau incluant un filtre biologique, ledit filtre biologique comprenant :
des moyens de transformation des composés azotés organiques en composés azotés inorganiques
des moyens d'oxydation des composés azotés inorganiques en nitrates non polluants,
**caractérisée en ce que** lesdits moyens de transformation et lesdits moyens d'oxydation sont des bactéries agissant dans un filtre biologique en présence de dioxyde de manganèse.

10. installation d'épuration d'eau selon la revendication 9, **caractérisée en ce que** lesdits moyens de transformation et lesdits moyens d'oxydation sont immergés dans le même récipient.

11. Installation d'épuration d'eau selon la revendication 9 ou 10 pour conditionner de l'eau.

12. Installation d'épuration d'eau selon la revendication 9 ou 10 pour élever des organismes aquatiques.

13. Installation d'épuration d'eau selon la revendication 12, **caractérisée en ce que** lesdits moyens de transformation incluent un matériau support.

14. Installation d'épuration d'eau selon la revendication 13, **caractérisée en ce que** ledit matériau support est du sable.

15. Installation d'épuration d'eau selon la revendication 14, **caractérisée en ce que** ledit dioxyde de manganèse est présent à de 5 à 25 % en volume par rapport audit sable.

16. Installation d'épuration d'eau selon l'une quelconque des revendications 12 à 15, **caractérisée en ce que** ledit dioxyde de manganèse est présent sous forme granulaire.

17. Installation d'épuration d'eau selon la revendication 16, **caractérisée en ce que** lesdits granules ont une taille moyenne entre 0,595 et 2 mm.
